# EUROPÄISCHE PATENTSCHRIFT

(11) **EP 3 439 816 B1**
(45) Veröffentlichungstag und Bekanntmachung des Hinweises auf die Patenterteilung: **20.04.2022**
(21) Anmeldenummer: 17715464.8
(22) Anmeldetag: 04.04.2017
(51) Int. Cl.: B23D 77/00

(54) **REIBAHLE**
REAMER
ALESOIR

(30) Priorität: 06.04.2016 DE 102016205657
(43) Veröffentlichungstag der Anmeldung: 13.02.2019
(73) Patentinhaber: Gühring KG, 72458 Albstadt (DE)
(72) Erfinder: SCHANZ, Gerhard, 72393 Burladingen (DE); BECK, Manfred, 72488 Sigmaringen (DE); KLEINER, Gilbert, 71514 Inzigkofen (DE)
(74) Vertreter: Winter, Brandl - Partnerschaft mbB
(86) Internationale Anmeldenummer: PCT/EP2017/057921
(87) Internationale Veröffentlichungsnummer: WO 2017/174542

(56) Entgegenhaltungen:
- EP-A1- 1 362 659
- DE-A1- 1 552 463
- DE-A1- 10 321 670
- DE-A1-102008 056 782
- US-A- 5 125 425
- US-A1- 2007 104 551
- US-A1- 2007 172 323

## Beschreibung

Die Erfindung betrifft eine Reibahle.

Das Entgraten von Bohrungen, die seitlich in eine beispielsweise zylindrische Ausnehmung münden, stellt ein großes Problem dar. Derartige Bohrungen sind zum Beispiel auf dem Gebiet der Kraftfahrzeugtechnik - bei Radialbohrungen, die in eine zentrale Axialbohrung der Nockenwelle oder der Kurbelwelle münden - und der Mobilhydraulik dann unumgänglich, wenn es beispielsweise darum geht, einen in einer zentralen Bohrung aufgenommenen Ventilkolben über Steueranschlüsse in Form von Radialkanälen anzusteuern. Da diese Radialkanäle in der Regel in einem Bohrbearbeitungsgang hergestellt werden müssen, kann selbst bei spezieller Gestaltung des Bohrwerkzeugs nicht zuverlässig ausgeschlossen werden, dass in einem Bereich, in dem der Radialkanal in die zentrale Bohrungsausnehmung mündet, ein Grat oder ein Restspan verbleibt.

Abgesehen davon, dass dieser Span die Strömungsverhältnisse beeinflusst und damit die Justierung und Funktion der entsprechenden hydraulischen Steuerung beeinträchtigt, besteht das besondere Problem, dass ein solcher Span, wenn er nicht vor Inbetriebnahme entfernt wird, nach gewisser Zeit abgerissen wird und im System folgenschwere Schäden verursacht.

Man hat daher seit jeher und im Zuge der immer empfindlicher werdenden Steuerungstechnik mit zunehmendem Aufwand versucht, diese Spanreste so vollständig wie möglich von der Radialkanalmündung zu entfernen. Dabei sind speziell gestaltete Werkzeuge zum Einsatz gelangt, mit denen der am Schaft sitzende Schneidkopf möglichst positionsgenau an den zu entfernenden Span herangeführt werden konnte. Die erforderliche große Präzision führt aber dazu, dass sich der Herstellungsprozess wesentlich verteuerte.

Ein spanabhebendes Werkzeug zum Entgraten derartiger Bohrungen, das diese Aufgabe mit relativ geringem Aufwand löst, ist beispielsweise aus der DE 103 21 670 A1 bekannt. Diese Druckschrift zeigt und beschreibt ein drehangetriebenes Werkzeug zum Entgraten von Durchbrüchen, z.B. Bohrungen. Das Werkzeug hat einen an einem Schaft sitzenden Schneidkopf mit zumindest einer Schneidkante, die sich zumindest abschnittsweise in axialer Richtung erstreckt. In das Werkzeug ist eine Radialkraft-Erzeugungseinrichtung integriert, mit der der Schneidkopf bei seiner Drehbewegung gesteuert radial auslenkbar ist. Die Radialkraft-Erzeugungseinrichtung weist einen innenliegenden Strömungsmittelkanal aus, von zumindest ein Stichkanal ausgeht, der im Bereich des Schneidkopfs in eine äußere Umfangsfläche des Werkzeugs mündet. Das aus der Mündungsöffnung des zumindest einen Stichkanals austretende Strömungsmittel staut sich an der gegenüberliegenden Innenwandung der Ausnehmung, wodurch zwischen dem Werkzeug und der Innenwandung der Ausnehmung ein Staudruck gebildet wird, der den Schneidkopf radial elastisch auslenkt.

Das in der vorgenannten Druckschrift angegebene Werkzeug kann den Entgratvorgang bei Bohrungen, die seitlich in eine beispielsweise zylindrische Ausnehmung münden, zuverlässig und fehlerfrei durchführen. Die Ausbildung des zumindest einen Stichkanals im Bereich des Schneidkopfs erfordert allerdings eine präzise und damit relativ aufwändige Bearbeitung, um die Schneidkanten des Schneidkopfs nicht zu beschädigen. Zudem ist bei diesem Werkzeug ein relativ hoher Zufuhrdruck des Strömungsmittels notwendig, um einen genügend großen Staudruck und damit eine genügend hohe Radialkraft zu erzeugen, die eine radiale Auslenkung des Schneidkopfs bewirkt.

Ein weiteres spanabhebendes Werkzeug zum Entgraten der oben beschriebenen Bohrungen ist aus der DE 10 2008 056 782 A1 bekannt. Diese Druckschrift offenbart eine Reibahle gemäß dem Oberbegriff des Anspruchs 1.

Im Unterschied zur DE 103 21 670 A1 besteht der Schneidkopf des Werkzeugs aus der DE 10 2008 056 782 A1 aus einem Schneidenteilbereich und einem schneidenlosen, im Querschnitt kreissegmentförmigen Teilbereich, an dessen äußerer Umfangsfläche mindestens zwei von einem zentralen Strömungsmittelkanal radial ausgehende Stichkanäle münden. Wie bei dem Werkzeug aus der DE 103 21 670 A1 ist auch bei dem Werkzeug der DE 10 2008 056 782 A1 ein relativ hoher Zufuhrdruck des Strömungsmittels notwendig, um einen genügend großen Staudruck und damit eine genügend große Radialkraft zu erzeugen, die eine radiale Auslenkung des Schneidkopfs bewirkt.

Die Druckschrift US 2007/0172323 A1 zeigt einen Bohrer mit einer Schneide zum Bohren von tiefen Bohrlöchern in einem Werkstück. Der Bohrer weist an seinem Bohrkopf eine Rückversetzung auf, in der ein durch einen Bohrerschaft und den Bohrkopf führender Kanal zur Zuführung von Bohrfluid mündet. Durch die Steuerung des Drucks des Bohrfluids kann gezielt eine Radialkraft auf den Bohrkopf ausgeübt werden und so die räumliche Richtung des Längsverlaufs des Bohrlochs beeinflusst werden.

Ausgehend von dem aus der DE 10 2008 056 782 A1 bekannten Werkzeug liegt der Erfindung daher die Aufgabe zugrunde, ein Werkzeug bereitzustellen, mit dem es gelingt, ohne großen Aufwand eine höhere Radialkraft am Schneidkopf zu erzeugen und dadurch den Entgratungsvorgang sehr wirkungsvoll, aber weiterhin präzise, wirtschaftlich, zuverlässig und fehlerfrei durchführen zu können.

Diese Aufgabe wird durch eine Reibahle mit den Merkmalen des unabhängigen Anspruchs 1 gelöst. Vorteilhafte Weiterbildungen sind Gegenstand abhängiger Ansprüche.

Eine erfindungsgemäße Reibahle hat einen Schaft; einen Schneidkopf mit umfangsseitig einer Vielzahl von Schneidkeilen, denen jeweils eine Spannut zugeordnet ist und die jeweils eine Schneide aufweisen, die sich zumindest abschnittsweise in axialer Richtung erstreckt, aufgrund einer Relativbewegung zwischen Reibahle und Werkstück eine Schneidbearbeitung vornimmt und auf einer virtuellen zylindrischen Rotationsfläche liegt, deren Durchmesser dem Nenndurchmesser der Reibahle entspricht, und zumindest einen rotationsflächenseitigen schneidkeil- und spannutfreien Flächenbereich; zumindest einen schneidkopfseitig geschlossenen Fluidkanal; und zumindest einen von dem Fluidkanal ausgehenden Stichkanal mit einer in dem schneidkeil- und spannutfreien Flächenbereich liegenden Mündungsöffnung. Im Unterschied zu dem eingangs diskutierten Stand der Technik ist bei der erfindungsgemäßen Reibahle der Schneidkopf geradegenutet und liegt die in dem schneidkeil- und spannutfreien Flächenbereich liegende Mündungsöffnung in einer gegenüber der virtuellen zylindrischen Rotationsfläche des Schneidkopfs radial zurückgesetzten und zur Längsmittelachse achsparallel verlaufenden Staudruckwirkfläche, die größer ist als eine Strömungsquerschnittsfläche des zumindest einen Stichkanals an der Mündungsöffnung.

Der schneidkeil- und spannutfreien Flächenbereich, der die Staudruckwirkfläche enthält, ermöglicht eine Verteilung des an der Mündungsöffnung des zumindest einen Stichkanals austretenden Fluids in dem Bereich oder Volumen zwischen der Reibahle und der zu bearbeitenden Innenwandung der Ausnehmung. Der sich in diesem Bereich oder Volumen durch das die Mündungsöffnung des zumindest einen Stichkanals verlassenden Fluids aufbauende Staudruck wirkt auf die Staudruckwirkfläche, wodurch eine Radialkraft erzeugt wird, die eine Auslenkung des Schneidkopfs in Richtung der Vielzahl der Schneidkeile bewirkt.

Die Staudruckwirkfläche ist eine beliebige ebene oder unebene, z.B. konvexe oder konkave, Fläche, die in dem schneidkeil- und spannutfreien Flächenbereich des Schneidkopfs liegt und gegenüber der virtuellen Rotationsfläche des Schneidkopfs radial zurückgesetzt ist, d.h. radial innerhalb der virtuellen Rotationsfläche liegt, die den Nenndurchmesser der Reibahle definiert. Die Staudruckwirkfläche ist daher eine Fläche, auf die bei einer Entgratbearbeitung einer Bohrung und einer Fluidversorgung der Reibahle der sich zwischen dem Schneidkopf und der gegenüberliegenden Innenwandung der Ausnehmung bildende Staudruck wirkt. Die Staudruckwirkfläche liegt gegenüber, vorteilhaft zumindest im Wesentlichen diametral gegenüber, der Vielzahl von Schneidkeilen. Die Staudruckwirkfläche liegt gegenüber, vorteilhaft zumindest im Wesentlichen diametral gegenüber, der Mitte eines im Querschnitt segmentförmigen Schneidkeilteilbereichs, in dem die mehreren Schneidkeile liegen.

Weil die Staudruckwirkfläche gegenüber der virtuellen Rotationsfläche des Schneidkopfs radial zurückgesetzt ist, ist der für die Erzeugung einer Radialkraft auf die Reibahle verantwortliche Flächeninhalt der Staudruckwirkfläche größer als die Strömungsquerschnittsfläche an der Mündungsöffnung des zumindest einen Stichkanals. Unter der Voraussetzung einer genügend großen Fluidzufuhr in die Reibahle, was sich werkzeugmaschinentechnisch ohne weiteres realisieren lässt, erzeugt der sich zwischen dem Schneidkopf der Reibahle und der gegenüberliegenden Innenwandung der Ausnehmung bildende Fluidstaudruck abhängig von der Größe der Staudruckwirkfläche eine Radialkraft, die den Schneidkopf radial in Richtung der Vielzahl von Schneidkeilen auslenkt.

Infolge der radialen Auslenkung bewegen sich die Schneiden der Vielzahl von Schneidkeilen der Reibahle, die eine Taumelbewegung ausführt, im Wesentlichen auf einer Kreisbahn um die Längsmittel- oder Drehachse der Reibahle. Es hat sich gezeigt, dass es auf diese Weise gelingt, den Grat bzw. die ggfs. vorhandenen Spanreste schonend und dennoch reproduzierbar und zuverlässig abzutragen, ohne Gefahr zu laufen, dass an anderer Stelle weitere Restspanbildung auftritt.

Die erfindungsgemäße Reibahle zeichnet sich also dadurch aus, dass die Staudruckwirkfläche so vorgesehen ist, dass die Summe der im Bereich der Staudruckwirkfläche zwischen dem Schneidkopf und der Innenwandung der Ausnehmung erzeugten Staudruckkräfte den Schaft radial in Richtung der Vielzahl von Schneidkeilen auslenken kann. Wie bereits erwähnt, ist dafür Voraussetzung, dass die Menge an zugeführtem Fluid ausreichend groß ist und sich ein stationärer Strömungszustand in dem Bereich oder Volumen zwischen dem Schneidkopf, im Besonderen der Staudruckwirkfläche des schneidkeil- und spannutfreien Flächenbereichs, und der gegenüberliegenden Innenwandung der Ausnehmung einstellen kann. Diese Voraussetzung lässt sich durch eine entsprechende Ansteuerung einer werkzeugmaschinenseitig vorgesehenen Fluidzufuhreinrichtung ohne weiteres erfüllen.

Durch die Ausgestaltung der Reibahle mit einer Staudruckwirkfläche wird im Vergleich zum Stand der Technik bei gleichem Fluiddruck eine größere Radialkraft erzeugt und der Entgratungsvorgang kann sehr wirkungsvoll und effizient durchgeführt werden. Ein weiterer Vorteil wird mit der erfindungsgemäßen Reibahle dadurch erhalten, dass mit geringem Aufwand eine große Radialkraft erzeugt werden kann und sich deshalb das ein und dieselbe Reibahle zum Entgraten unterschiedlich großer Bohrungsdurchmesser verwenden lässt.

Der zumindest eine Fluidkanal verläuft vorzugsweise entlang der Längsmittel- oder Drehachse der Reibahle und erstreckt sich dabei von einem Einspannabschnitt des Schafts bis in den Schneidkopf. In diesem Fall lässt sich der Fluidkanal besonders einfach als eine zentrische Bohrung, z.B. Sacklochbohrung, in der Reibahle ausbilden. Der Schneidkopf ist an seinem in Werkzeugvorschubrichtung gelegenen Ende verschlossen, so dass dort kein Fluid aus dem Fluidkanal austreten kann. Stattdessen tritt das Fluid über den zumindest einen Stichkanal, dessen Mündungsöffnung im schneidkeil- und spannutfreien Flächenbereich liegt, aus der Reibahle aus. Die erfindungsgemäße Reibahle kann aber auch mehrere, im Schaft, z.B. parallel verlaufende, Fluidkanäle haben.

Der zumindest eine Stichkanal verläuft im Wesentlichen in radialer Richtung, vorzugsweise rechtwinklig zum Fluidkanal. In diesem Fall lässt sich der zumindest eine Stichkanal besonders einfach als eine radiale Bohrung ausbilden. Die Reibahle kann im schneidkeil- und spannutfreien Flächenbereich aber auch mehrere Stichkanäle haben, deren Mündungsöffnungen in dem schneidkeil- und spannutfreien Flächenbereich liegen. Durch mehrere Stichkanäle lässt sich das in die Reibahle zugeführte Fluid rascher über die Staudruckwirkfläche verteilen, wodurch eine wirkungsvollere und schnellere Bearbeitung möglich ist. Der Verlauf der Stichkanäle vom Fluidkanal bis zu den im schneidkeil- und spannutfreien Flächenbereich liegenden Mündungsöffnungen kann grundsätzlich beliebig gestaltet sein.

Es hat sich gezeigt, dass das Fluid selbst ein gasförmiges Medium, z.B. Luft oder ein Aerosol, sein kann, vorzugsweise kommt aber ein zur spanenden Bearbeitung gängiges flüssiges Kühlschmiermittel zum Einsatz.

Versuche haben gezeigt, dass die durch den Staudruck erzeugte Radialkraft umso größer ist, je größer die Staudruckwirkfläche im Vergleich zur Strömungsquerschnittsfläche des zumindest einen Stichkanals an der Mündungsöffnung ist. Die Staudruckwirkfläche ist dabei achsparallel zur Längsmittelachse der Reibahle angeordnet. Die Staudruckwirkfläche kann dabei die Form einer konkaven, konvexen oder ebenen Fläche, aber auch die Form einer muldenartigen Vertiefung, z.B. einer Axialnut, haben. Die ebene Fläche kann plangeschliffen oder plangefräst gebildet sein.

Die Staudruckwirkfläche kann die gleiche axiale Länge haben wie der Schneidkopf, also in axialer Richtung sich über die gesamte Länge des Schneidkopfs erstrecken. Die Staudruckwirkfläche der Reibahle kann aber auch eine kleinere axiale Länge als der Schneidkopf haben. In diesem Fall kann die Staudruckwirkfläche in einem axialen Abstand vor dem stirn- und/oder schaftseitigen Ende des Schneidkopfs enden. Im Besonderen kann die Staudruckwirkfläche in einem definierten Abstand vor dem vorderen und hinteren Ende des Schneidkopfs enden. Dadurch ergibt sich eine Art taschenartiger Raum zwischen dem Schneidkopf und der zu bearbeitenden Innenwandung der Ausnehmung. Der axiale Abfluss des Fluids entlang des schneidkeil- und spannutfreien Flächenbereichs bzw. der Staudruckwirkfläche der Reibahle wird dadurch behindert und der Staudruck erhöht.

Der Teil des Schafts der Reibahle, der nicht dem Einspannen der Reibahle dient, kann gegenüber dem Schneidkopf im Durchmesser verjüngt sein. Dies sorgt für eine höhere Elastizität der Reibahle und erleichtert die radiale Auslenkung des Schneidkopfs.

Der Schneidkopf der Reibahle kann zumindest auf seiner dem Schaft abgewandten Seite einen an sich bekannten Anschnitt haben. Dadurch wird das Einführen der Reibahle weiter vereinfacht. Wenn ein Anschnitt auf beiden Seiten des Schneidkopfs ausgebildet ist, kann die Reibahle auch zum Entgraten des inneninliegenden Austritts einer Bohrung genutzt werden, in die die Reibahle eingeführt wird.

Für die Materialwahl der Reibahle gibt es praktisch keine Einschränkungen. Die Reibahle kann entweder insgesamt oder aber zumindest im Bereich des Schneidkopfs aus einem hochfesten Werkstoff, wie z.B. verschleißfesten Stahl, Schnellstahl (HSS, HSSE, HSSEBM), Hartmetall, Keramik oder Cermet hergestellt sein, wobei auch geeignete Beschichtungen Anwendung finden können.

Erfindungsgemäß ist das spanabhebende Werkzeug eine Reibahle und hat die Staudruckwirkfläche in einer bevorzugten Ausführungsform die Form einer ebenen Fläche. Weiter hat die Reibahle einen entlang der Längsmittelachse der Reibahle verlaufenden Fluidkanal, einen Schneidkopf, dessen Durchmesser größer als der Durchmesser des Schafts ist sowie einen nach dem Vorbild der DE 10 2008 056 782 A1 einen Schneidkeilteilbereich mit drei Schneidkeilen mit geraden Nuten. Hinsichtlich des fertigungstechnischen Aufwands und der möglichen erzeugbaren Radialkraft erweist sich diese Ausführungsform als sehr vorteilhaft.

Nachfolgend werden anhand der beiliegenden Zeichnungen verschiedene Ausführungsformen eines erfindungsgemäßen spanabhebenden Werkzeugs erläutert.

In den Zeichnungen zeigt:
Fig. 1 eine perspektivische Ansicht eines spanabhebenden Werkzeugs einer ersten Ausführungsform;
Fig. 2 eine erste schematische Seitenansicht des spanabhebenden Werkzeugs aus Fig.1;
Fig. 3 eine zweite schematische Seitenansicht des spanabhebenden Werkzeugs aus Fig. 1;
Fig.4 eine Querschnittsansicht des Schneidkopfs des spanabhebenden Werkzeugs aus Fig. 1;
Fig. 5 eine vergrößert dargestellte Einzelheit A aus Fig. 2;
Fig. 6 eine perspektivische Ansicht eines Schneidkopfs der ersten Ausführungsform eines spanabhebenden Werkzeugs;
Fig. 7 eine Querschnittsansicht des Schneidkopfs aus Fig. 6;
Fig. 8 eine perspektivische Ansicht eines Schneidkopfs einer zweiten Ausführungsform eines spanabhebenden Werkzeugs;
Fig. 9 eine Querschnittsansicht des Schneidkopfs aus Fig. 8;
Fig. 10 eine perspektivische Ansicht eines Schneidkopfs einer dritten Ausführungsform eines spanabhebenden Werkzeugs; und
Fig. 11 eine Querschnittsansicht einer in eine zylindrische Ausnehmung mündenden Bohrung.

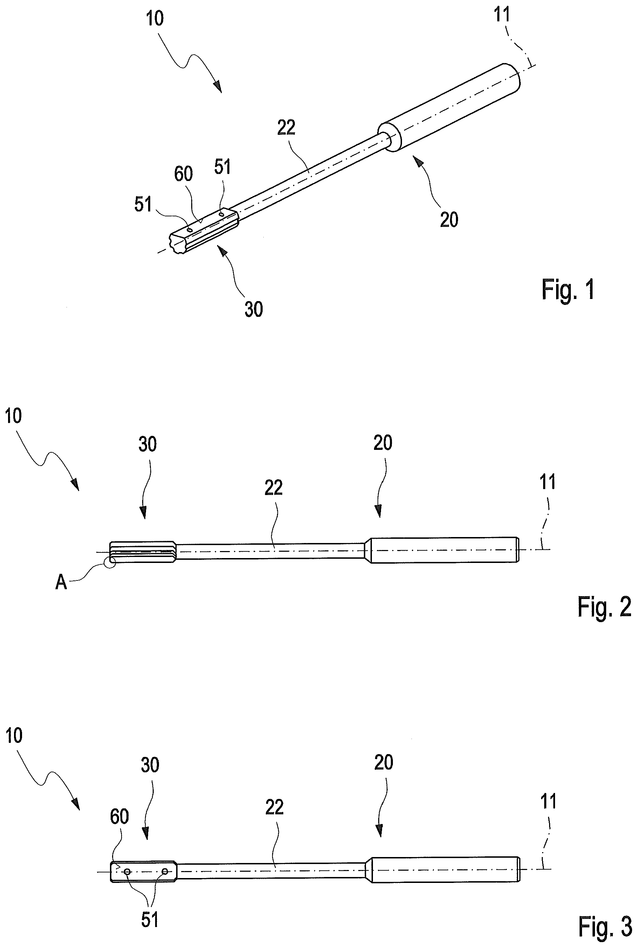

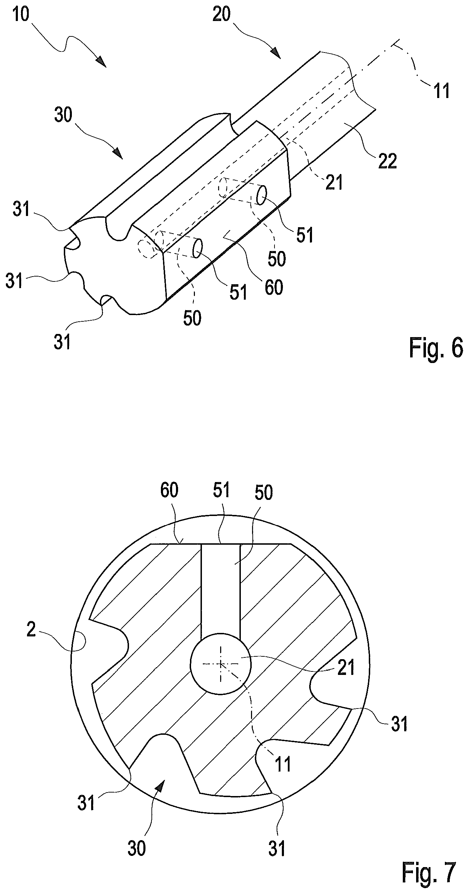

Die Figuren 1 bis 7 zeigen eine bevorzugte erste Ausführungsform eines erfindungsgemäßen drehangetriebenen, spanabhebenden Werkzeugs 10, das in Form einer Reibahle ausgebildet ist.

Das Werkzeug 10 hat einen Schaft 20, einen Schneidkopf 30, einen Fluidkanal 21 und zwei Stichkanäle 50.

Der Schaft 20 dient dazu, das Werkzeug in einem Spannfutter oder dergleichen einzuspannen. Die Fig. 1, 2 und 3 zeigen, dass sich der Schaft 20 in Richtung Schneidkopf 30 im Durchmesser verjüngt. Der verjüngte Längenabschnitt 22 des Schafts 20 ist im Durchmesser kleiner als der Nenndurchmesser des Schneidkopfs 30. Der im Durchmesser verjüngte Längenabschnitt 22 des Schafts 20 sorgt für eine Elastizität des Werkzeugs 10, die eine radiale Auslenkung des Schneidkopfs 30 erleichtert.

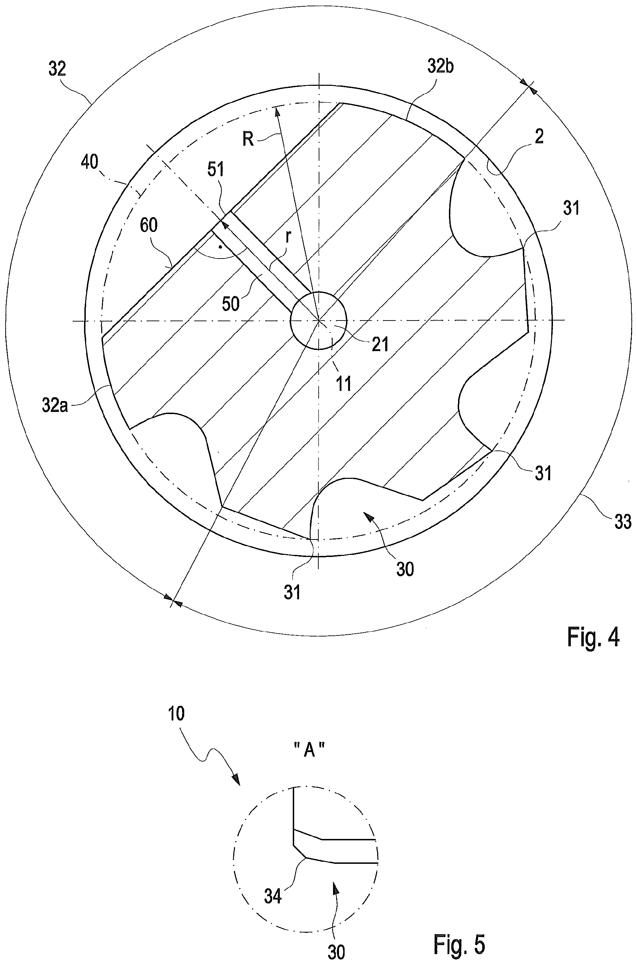

Der Schneidkopf 30 sitzt axial an dem verjüngten Längenabschnitt 22 des Schafts 20. Der in der gezeigten Ausführungsform geradegenutete Schneidkopf 30 weist drei Schneidkeile mit drei Schneiden 31 auf, die sich geradlinig in axialer Richtung erstrecken und aufgrund einer Relativbewegung zwischen dem Werkzeug 10 und einem zu bearbeitenden Werkstück eine Schneidbearbeitung vornehmen und die auf einer virtuellen zylindrischen Rotationsfläche 40 liegen (siehe Fig. 4). Der Durchmesser der virtuellen zylindrischen Rotationsfläche 40 entspricht dem Nenndurchmesser des Schneidkopfs 30 des Werkzeugs 10. Der Schneidkopf 30 weist des Weiteren einen schneidkeil- und spannutfreien Flächenbereich 32 auf, in dem sich kein Schneidkeil und keine Spannut befinden und der daher keine Schneidbearbeitung vornimmt.

Das Werkzeug 10 hat des Weiteren einen innenliegenden, schneidkopfseitig geschlossenen Fluidkanal 21, der sich entlang der Längsmittelachse 11 durch den Schaft 20 bis in den Schneidkopf 30 hinein erstreckt und von dem im Bereich des Schneidkopfs 30 zwei radiale Stichkanäle 50 ausgehen. Die Stichkanäle 50 sind so angeordnet, dass sie mit einer Mündungsöffnung 51 in einer Staudruckwirkfläche 60 münden, die innerhalb des schneidkeil- und spannutfreien Flächenbereichs 32 liegt, wie es in Fig. 4 gezeigt ist.

Die Staudruckwirkfläche 60 ist in der gezeigten Ausführungsform gemäß den Figuren 1, 3, 4, 6 und 7 eine ebene rechteckige Fläche, die parallel zur Längsmittelachse 11 verläuft und gegenüber der Rotationsfläche 40 des Schneidkopfs 30 radial zurückgesetzt ist. Die Staudruckwirkfläche 60 liegt daher radial innerhalb der virtuellen Rotationsfläche 40. Der radiale Abstand r der Staudruckwirkfläche 60 von der Längsmittelachse 11 ist kleiner als der Radius R der virtuellen zylindrischen Rotationsfläche 40, deren Durchmesser dem Nenndurchmesser des Werkzeugs 10 entspricht. Die Fig. 1 und 3 zeigen, dass sich die Staudruckwirkfläche 60 in axialer Richtung über die gesamte Länge des Schneidkopfs 30 erstreckt, also die gleiche axiale Länge hat wie der Schneidkopf 30. Die Fig. 1 und 3 zeigen weiter, dass diese Staudruckwirkfläche 60 größer ist als die Summe der Strömungsquerschnittsflächen der Stichkanäle 50 an den Mündungsöffnungen 51.

Die Fig. 4 zeigt, dass die Staudruckwirkfläche 60 zumindest im Wesentlichen gegenüber der Mitte des im Querschnitt segmentförmigen Schneidkeilteilbereichs 33 liegt, in dem die Schneidkeile mit Schneiden 31 angeordnet sind. Die Staudruckwirkfläche 60 ist vorteilhaft im Wesentlichen senkrecht zur Winkelhalbierenden des im Querschnitt segmentförmigen Schneidkeilteilbereichs 33 bzw. des Segments des schneidkeil- und spannutfreien Flächenbereichs 32 angeordnet.

Die Fig. 4 zeigt darüber hinaus, dass die Mantelfläche des schneidkeil- und spannutfreien Flächenbereichs 32 in der gezeigten Ausführungsform zwei zylindrische Rotationsflächenabschnitte 32a, 32b und die Staudruckwirkfläche 60 aufweist.

Der schneidkeil- und spannutfreie Flächenbereich 32 ermöglicht über die Staudruckwirkfläche 60 eine Verteilung des an den Mündungsöffnungen der Stichkanäle 50 austretenden Fluids in dem Bereich oder Volumen zwischen dem Werkzeugs 10 und der gegenüberliegenden Innenwandung der Ausnehmung 2 eines zu bearbeitenden Werkstücks. In der Annahme einer ausreichenden Fluidzufuhr in den Fluidkanal 21 wirkt der sich in diesem Bereich oder Volumen aufbauende Staudruck des die Mündungsöffnungen 51 der Stichkanäle 50 verlassenden Fluids auf die Staudruckwirkfläche 60, wodurch eine Radialkraft erzeugt wird, die eine Auslenkung des Schneidkopfs 30 in Richtung der Schneidkeile mit Schneiden31 bewirkt.

Infolge der radialen Auslenkung bewegen sich die Schneiden 31 der Schneidkeile im Wesentlichen auf einer Kreisbahn um die Längsmittelachse 11. Es hat sich gezeigt, dass es auf diese Weise gelingt, einen Grat bzw. ggfs. vorhandenen Spanreste in einer Bohrung 1, die seitlich in eine beispielsweise zylindrische Ausnehmung 2 mündet, schonend und dennoch reproduzierbar und zuverlässig abzutragen, ohne Gefahr zu laufen, dass an anderer Stelle weitere Restspanbildung auftritt.

Der Schneidkopf 30 des Werkzeugs 10 hat des Weiteren auf seiner dem Schaft 20 abgewandten Seite einen an sich bekannten Anschnitt 34.

Das erfindungsgemäße, spanabhebende Werkzeug 10 zeichnet sich also dadurch aus, dass die Staudruckwirkfläche 60 so vorgesehen ist, dass die Summe der im Bereich der Staudruckwirkfläche 60 zwischen dem Schneidkopf 30 und der Innenwandung der Ausnehmung 2 erzeugten Staudruckkräfte den Schaft 20 radial in Richtung der Schneidkeile mit Schneiden 31 auslenken kann. Wie bereits erwähnt, ist dafür Voraussetzung, dass die Menge an in den Fluidkanal 21 zugeführtem Fluid ausreichend groß ist, damit sich ein stationärer Strömungszustand in dem Bereich oder Volumen zwischen dem Schneidkopf 30, im Besonderen der Staudruckwirkfläche 60 des schneidkeil- und spannutfreien Flächenbereichs 32, und der gegenüberliegenden Innenwandung der Ausnehmung 2 einstellen kann. Eine ausreichend große Fluidzufuhr lässt sich werkzeugmaschinentechnisch ohne weiteres realisieren.

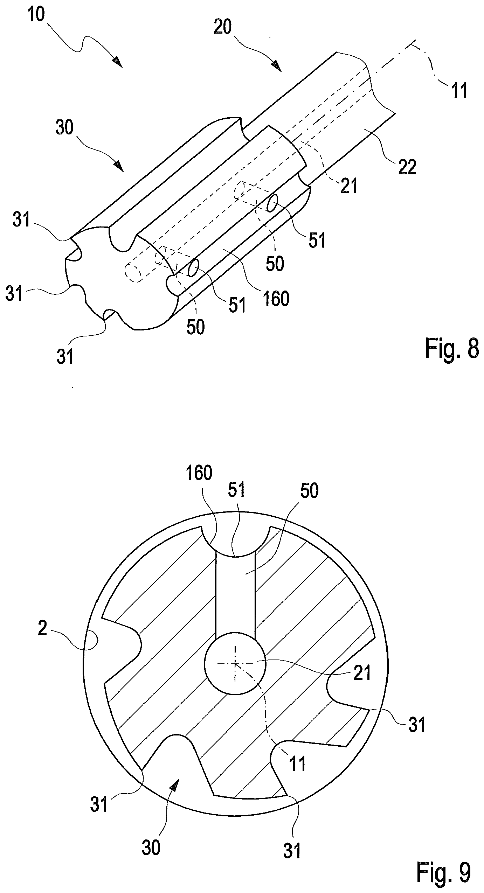

Die Figuren 8 und 9 zeigen eine zweite Ausführungsform eines erfindungsgemäßen, spanabhebenden Werkzeugs. Die zweite Ausführungsform unterscheidet sich von der ersten Ausführungsform nur durch die Form der Staudruckwirkfläche 160. Die Staudruckwirkfläche 160 ist in der zweiten Ausführungsform als eine im Querschnitt, in Richtung des Stichkanals, konvexe Axialnut geformt.

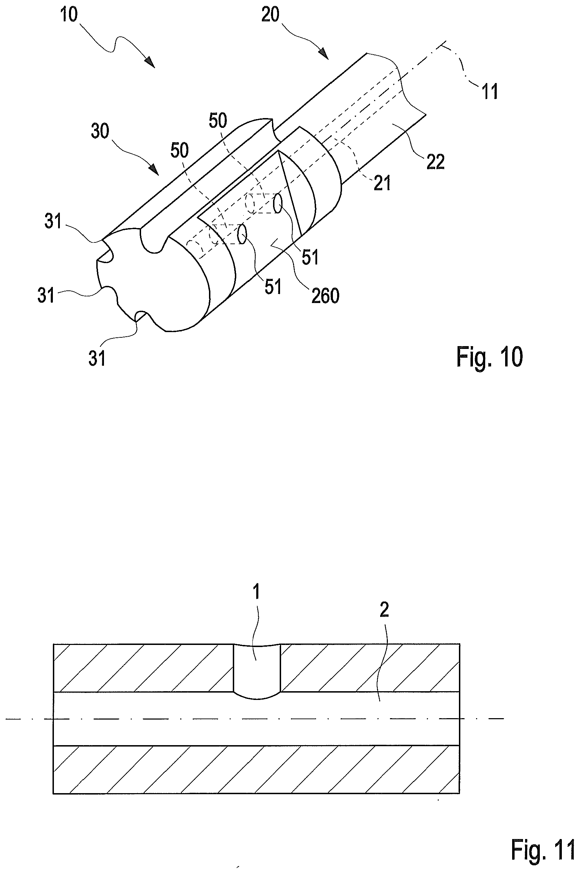

Die Figur 10 zeigt eine dritte Ausführungsform eines erfindungsgemäßen, spanabhebenden Werkzeugs. Die dritte Ausführungsform unterscheidet sich von der ersten Ausführungsformdurch die Länge der Staudruckwirkfläche 260. Die Staudruckwirkfläche 260 hat zwar wie bei der ersten Ausführungsform die Form einer ebenen Fläche, aber die axiale Länge der Staudruckwirkfläche 260 ist in der dritten Ausführungsform kleiner als die axiale Länge des Schneidkopfs 30. Die Staudruckwirkfläche 260 endet in einem axialen Abstand vor dem stirn- und schaftseitigen Ende des Schneidkopfs 30. Dadurch ergibt sich eine Art taschenartiger Raum zwischen dem Schneidkopf 30 und der zu bearbeitenden Innenwandung der Ausnehmung 2. Der axiale Abfluss des Fluids entlang des schneidkeil- und spannutfreien Flächenbereichs bzw. der Staudruckwirkfläche 260 des spanabhebenden Werkzeugs wird dadurch behindert und der Staudruck erhöht.

In den in den Figuren 1 bis 10 gezeigten Ausführungsformen ist die Staudruckwirkfläche 60 achsparallel zur Längsmittelachse 11 des spanabhebenden Werkzeugs 10 angeordnet.

Des Weiteren kann die Staudruckwirkfläche im Unterschied zu den gezeigten Ausführungsformen die Form einer konkaven oder konvexen Fläche haben.

Im Unterschied zu der in Fig. 4 gezeigten Gestaltung des schneidkeil- und spannutfreien Flächenbereichs, kann die Staudruckwirkfläche radial weiter zurückgesetzt sein, wodurch sich die beiden zylindrischen Rotationsflächenabschnitte verkleinern und die Staudruckwirkfläche vergrößert. Die Staudruckwirkfläche kann soweit zurückgesetzt sein, dass die Mantelfläche des schneidkeil- und spannutfreien Flächenbereichs im Wesentlichen nur noch aus Staudruckwirkfläche besteht.

Ebenso kann das spanabhebende Werkzeug mehr oder weniger als zwei Stichkanäle haben. Der Verlauf der Stichkanäle von dem zentralen Fluidkanal bis zu den im schneidkeil- und spannutfreien Flächenbereich liegenden Mündungsöffnungen kann grundsätzlich beliebig gestaltet sein.

Des Weiteren kann das spanabhebende Werkzeug auch mehrere im Schaft, z.B. parallel, verlaufende Fluidkanäle haben, die jeweils zu einem zugeordneten Stichkanal führen.

Das spanabhebende Werkzeug kann zusätzlich zur auf seiner dem Schaft abgewandten Seite auch auf seiner dem Schaft zugewandten Seite des Schneidkopfs einen Anschnitt haben, so dass das spanabhebende Werkzeug auch zum Entgraten des inneninliegenden Austritts einer Ausnehmung genutzt werden, in die das spanabhebende Werkzeug eingeführt wird.

Zudem spielt es keine Rolle, auf welche Weise die Staudruckwirkfläche am Schneidkopf erzeugt wurde. Beispielsweise kann bei dem in der DE 103 21 670 A1 angegebenen Werkzeug ein schneidkeil- und spannutfreier Flächenbereich bzw. eine Staudruckwirkfläche einfach dadurch erzeugt werden, dass am Schneidkopf in einem Bereich, in dem eine Mündungsöffnung zumindest eines Stichkanals liegt, durch ein Abschleifen oder eine andere abtragende Bearbeitung ein Flächenbereich, in dem ein axialer Richtung und/oder in Umfangsrichtung begrenzter Teil einer oder mehrerer Schneidkeile entfernt sind, geschaffen wird. Der so erhaltene schneidkeil- und spannutfreie Flächenbereich weist dann eine Staudruckwirkfläche auf, in der die Mündungsöffnung des zumindest einen Stichkanals liegt und die im Flächeninhalt größer ist als die Strömungsquerschnittsfläche des zumindest einen Stichkanals. In diesem Fall kann die Mantelfläche des schneidkeil- und spannutfreien Flächenbereichs im Unterschied zu der in Fig. 4 gezeigten Gestaltung nur aus Staudruckwirkfläche bestehen.

Es ist auch möglich, dass innerhalb des schneidkeil- und spannutfreien Flächenbereichs mehrere unterschiedlich ausgerichtete Staudruckwirkflächen angeordnet sind.

Im Unterschied zu der in Fig. 4 gezeigten Gestaltung des schneidkeil- und spannutfreien Flächenbereichs, kann die Staudruckwirkfläche radial weiter zurückgesetzt sein, wodurch sich die beiden zylindrischen Rotationsflächenabschnitte verkleinern und die Staudruckwirkfläche vergrößert. Die Staudruckwirkfläche kann soweit zurückgesetzt sein, dass die Mantelfläche des schneidkeil- und spannutfreien Flächenbereichs im Wesentlichen nur noch aus Staudruckwirkfläche besteht.

Des Weiteren können im Schneidkeilteilbereich mehr oder weniger als drei Schneidkeile angeordnet sein.

Ebenso kann das spanabhebende Werkzeug mehr oder weniger als zwei Stichkanäle haben. Der Verlauf der Stichkanäle von dem zentralen Fluidkanal bis zu den im schneidkeil- und spannutfreien Flächenbereich liegenden Mündungsöffnungen kann grundsätzlich beliebig gestaltet sein.

Des Weiteren kann das spanabhebende Werkzeug auch mehrere im Schaft, z.B. parallel, verlaufende Fluidkanäle haben, die jeweils zu einem zugeordneten Stichkanal führen.

Das spanabhebende Werkzeug kann zusätzlich zur auf seiner dem Schaft abgewandten Seite auch auf seiner dem Schaft zugewandten Seite des Schneidkopfs einen Anschnitt haben, so dass das spanabhebende Werkzeug auch zum Entgraten des inneninliegenden Austritts einer Ausnehmung genutzt werden, in die das spanabhebende Werkzeug eingeführt wird.

Zudem spielt es keine Rolle, auf welche Weise die Staudruckwirkfläche am Schneidkopf erzeugt wurde. Beispielsweise kann bei dem in der DE 103 21 670 A1 angegebenen Werkzeug ein schneidkeil- und spannutfreier Flächenbereich bzw. eine Staudruckwirkfläche einfach dadurch erzeugt werden, dass am Schneidkopf in einem Bereich, in dem eine Mündungsöffnung zumindest eines Stichkanals liegt, durch ein Abschleifen oder eine andere abtragende Bearbeitung ein Flächenbereich, in dem ein axialer Richtung und/oder in Umfangsrichtung begrenzter Teil einer oder mehrerer Schneidkeile entfernt sind, geschaffen wird. Der so erhaltene schneidkeil- und spannutfreie Flächenbereich weist dann eine Staudruckwirkfläche auf, in der die Mündungsöffnung des zumindest einen Stichkanals liegt und die im Flächeninhalt größer ist als die Strömungsquerschnittsfläche des zumindest einen Stichkanals. In diesem Fall kann die Mantelfläche des schneidkeil- und spannutfreien Flächenbereichs im Unterschied zu der in Fig. 4 gezeigten Gestaltung nur aus Staudruckwirkfläche bestehen.

## Patentansprüche

1. Reibahle, mit:
einem Schaft (20),
einem Schneidkopf (30) mit umfangsseitig einer Vielzahl von Schneidkeilen, denen jeweils eine Spannut zugeordnet ist und die jeweils eine Schneide (31) aufweisen, die sich zumindest abschnittsweise in axialer Richtung erstreckt, aufgrund einer Relativbewegung zwischen Reibahle und Werkstück eine Schneidbearbeitung vornimmt und auf einer virtuellen zylindrischen Rotationsfläche (40) liegt, deren Durchmesser dem Nenndurchmesser der Reibahle entspricht, und zumindest einem schneidkeil- und spannutfreien Flächenbereich (32),
zumindest einem schneidkopfseitig geschlossenen Fluidkanal (21), der sich durch den Schaft (20) und bis in den Schneidkopf (30) hinein erstreckt, und
zumindest einem von dem Fluidkanal (21) ausgehenden Stichkanal (50) mit einer in dem schneidkeil- und spannutfreien Flächenbereich(32) liegenden Mündungsöffnung (51)
**dadurch gekennzeichnet, dass** die Spannuten gerade sind, und
die in dem schneidkeil- und spannutfreien Flächenbereich (32) liegende Mündungsöffnung (51) in einer gegenüber der virtuellen Rotationsfläche (40) des Schneidkopfs (30) radial zurückgesetzten und zur Längsmittelachse (11) achsparallel verlaufenden Staudruckwirkfläche (60, 160, 260) liegt, die größer ist als eine Strömungsquerschnittsfläche des zumindest einen Stichkanals (50) an der Mündungsöffnung (51).

2. Reibahle nach Anspruch 1, **dadurch gekennzeichnet, dass** die Staudruckwirkfläche (60) die Form einer ebenen Fläche hat.

3. Reibahle nach Anspruch 1, **dadurch gekennzeichnet, dass** die Staudruckwirkfläche (160) die Form einer muldenartigen Vertiefung hat.

4. Reibahle nach Anspruch 1, **dadurch gekennzeichnet, dass** die Staudruckwirkfläche (160) in Richtung des zumindest einen Stichkanals (50) konkav oder konvex geformt ist.

5. Reibahle nach einem der Ansprüche 1 bis 4, **dadurch gekennzeichnet, dass** die Staudruckwirkfläche (260) eine kleinere axiale Länge als der Schneidkopf (30) hat.

6. Reibahle nach Anspruch 5, **dadurch gekennzeichnet, dass** die Staudruckwirkfläche (260) in Werkzeugvorschubrichtung gesehen in einem definierten Abstand zum vorderen und hinteren Ende des Schneidkopfs (30) endet.

7. Reibahle nach einem der Ansprüche 1 bis 6, **dadurch gekennzeichnet, dass** die Reibahle zwei geradlinige Stichkanäle (50) hat, die von dem zumindest einen Fluidkanal (21) ausgeht.

8. Reibahle nach einem der Ansprüche 1 bis 7, **dadurch gekennzeichnet, dass** der zumindest eine Fluidkanal (21) entlang der Längsmittelachse (11) der Reibahle verläuft.

9. Reibahle nach einem der Ansprüche 1 bis 8, **dadurch gekennzeichnet, dass** der Durchmesser des Schneidkopfs (30) größer als der Durchmesser des Schafts (20) ist.

10. Reibahle nach einem der Ansprüche 1 bis 9, **dadurch gekennzeichnet, dass** mehrere innenliegende Fluidkanäle (21) vorgesehen sind.

11. Reibahle nach einem der Ansprüche 1 bis 10, **dadurch gekennzeichnet, dass** der Schneidkopf (30) zumindest auf seiner vom Schaft (20) abgewandten Seite einen Anschnitt (34) hat.

## Claims

1. A reamer comprising:
a shaft (20),
a cutting head (30) with a plurality of cutting wedges on the circumference, said cutting wedges each being paired with a flute and each having a cutter (31), which extends in an axial direction at least in some sections, carries out a cutting process on the basis of a relative movement between reamer and workpiece, and lies on a virtual cylindrical rotational surface (40) with a diameter that corresponds to the nominal diameter of the reamer, and at least one cutting wedge-free and flute-free surface region (32),
at least one fluid channel (21), which is closed on the cutting head side and which extends through the shaft (20) and into the cutting head (30), and
at least one puncture channel (50), which starts from the fluid channel (21) and comprises an opening (51) that lies in the cutting wedge-free and flute-free surface region (32)
**characterized in that**
the flutes are straight, and
the opening (51) that lies in the cutting wedge-free and flute-free surface region (32) lies in a dynamic-pressure active surface (60, 160, 260), which is radially recessed relative to the virtual rotational surface (40) of the cutting head (30) and runs axially parallel to the longitudinal central axis (11), and which is larger than a flow cross sectional surface of the at least one puncture channel (50) at the opening (51).

2. The reamer according to claim 1, **characterized in that** the dynamic-pressure active surface (60) has the shape of an even surface.

3. The reamer according to claim 1, **characterized in that** the dynamic-pressure active surface (160) has the shape of a trough-like depression.

4. The reamer according to claim 1, **characterized in that** the dynamic-pressure active surface (160) is shaped concavely or convexly in the direction of the at least one puncture channel (50).

5. The reamer according to one of claims 1 to 4, **characterized in that** the dynamic-pressure active surface (260) has a smaller axial length than the cutting head (30).

6. The reamer according to claim 5, **characterized in that**, viewed in the tool feed direction, the dynamic pressure active surface (260) ends at a defined distance to the front and rear end of the cutting head (30).

7. The reamer according to one of claims 1 to 6, **characterized in that** the reamer has two straight-lined puncture channels (50), which starts at the at least one fluid channel (21).

8. The reamer according to one of claims 1 to 7, **characterized in that** the at least one fluid channel (21) runs along the longitudinal central axis (11) of the reamer.

9. The reamer according to one of claims 1 to 8, **characterized in that** the diameter of the cutting head (30) is larger than the diameter of the shaft (20).

10. The reamer according to one of claims 1 to 9, **characterized in that** a number of interior fluid channels (21) are provided.

11. The reamer according to one of claims 1 to 10, **characterized in that** the cutting head (30) has a gate (34) at least on its side, which faces away from the shaft (20).

## Revendications

1. Alésoir, avec :
une tige (20),
une tête de coupe (30) avec, sur le côté circonférentiel, une pluralité de coins de coupe auxquels une rainure de serrage est associée et qui présentent respectivement un tranchant (31) qui s'étend au moins par sections dans la direction axiale, qui effectue un usinage de coupe en raison d'un mouvement relatif entre l'alésoir et la pièce à usiner et qui repose sur une surface de rotation cylindrique virtuelle (40) dont le diamètre correspond au diamètre nominal de l'alésoir, et au moins une zone de surface (32) exempte de coin de coupe et de goujure,
au moins un canal de fluide (21) fermé côté tête de coupe, qui s'étend à travers la tige (20) et jusque dans la tête de coupe (30), et
au moins un canal de dérivation (50) émanant du canal de fluide (21) avec une ouverture d'embouchure (51) située dans la zone de surface (32) exempte de coin de coupe et de goujure
**caractérisé en ce que**
les goujures sont rectilignes, et
l'ouverture d'embouchure (51) située dans la zone de surface (32) exempte de coin de coupe et de goujure se situe dans une surface d'effet de pression dynamique (60, 160, 260) située radialement en retrait par rapport à la surface de rotation virtuelle (40) de la tête de coupe (30) et s'étendant parallèlement à l'axe central longitudinal (11), qui est plus grande qu'une surface de section transversale d'écoulement de l'au moins un canal de dérivation (50) au niveau de l'ouverture d'embouchure (51).

2. Alésoir selon la revendication 1, **caractérisé en ce que** la surface d'effet de pression dynamique (60) a la forme d'une surface plane.

3. Alésoir selon la revendication 1, **caractérisé en ce que** la surface d'effet de pression dynamique (160) a la forme d'un évidement en forme d'auge.

4. Alésoir selon la revendication 1, **caractérisé en ce que** la surface d'effet de pression dynamique (160) a une forme concave ou convexe en direction de l'au moins un canal de dérivation (50).

5. Alésoir selon l'une quelconque des revendications 1 à 4, **caractérisé en ce que** la surface d'effet de pression dynamique (260) a une longueur axiale inférieure à celle de la tête de coupe (30).

6. Alésoir selon la revendication 5, **caractérisé en ce que** la surface d'effet de pression dynamique (260) se termine à une distance définie des extrémités avant et arrière de la tête de coupe (30), vue dans le sens d'avance d'outil.

7. Alésoir selon l'une quelconque des revendications 1 à 6, **caractérisé en ce que** l'alésoir présente deux canaux de dérivation rectilignes (50) partant de l'au moins un canal de fluide (21).

8. Alésoir selon l'une quelconque des revendications 1 à 7, **caractérisé en ce que** l'au moins un canal de fluide (21) s'étend le long de l'axe central longitudinal (11) de l'alésoir.

9. Alésoir selon l'une quelconque des revendications 1 à 8, **caractérisé en ce que** le diamètre de la tête de coupe (30) est supérieur au diamètre de la tige (20).

10. Alésoir selon l'une quelconque des revendications 1 à 9, **caractérisé en ce que** plusieurs canaux de fluide internes (21) sont prévus.

11. Alésoir selon l'une quelconque des revendications 1 à 10, **caractérisé en ce que** la tête de coupe (30) présente une entaille (34) au moins sur sa face opposée à la tige (20).
